# EUROPÄISCHE PATENTSCHRIFT

(11) **EP 2 807 961 B1**
(45) Veröffentlichungstag und Bekanntmachung des Hinweises auf die Patenterteilung: **13.09.2017**
(21) Anmeldenummer: 14170159.9
(22) Anmeldetag: 28.05.2014
(51) Int. Cl.: A47J 31/10, A47J 31/46

(54) **Kaffeevollautomat mit motorisch verstellbarem Mehrwegventil**
Fully automatic coffee machine with motorised multi-port valve
Machine à café entièrement automatique équipée d'une soupape à voies multiples réglable par un moteur

(30) Priorität: 29.05.2013 DE 102013210108
(43) Veröffentlichungstag der Anmeldung: 03.12.2014
(73) Patentinhaber: BSH Hausgeräte GmbH, 81739 München (DE)
(72) Erfinder: Eder, Florian, 83132 Pittenhart (DE); Einsiedler, Thomas, 83278 Traunstein (DE)

(56) Entgegenhaltungen:
- EP-A1- 2 151 613
- EP-A2- 2 236 878
- DE-B3-102006 049 894
- DE-T2- 60 317 357
- FR-A1- 2 844 441

## Beschreibung

Die Erfindung betrifft einen Heißgetränkeautomaten, insbesondere einen Kaffeevollautomaten, für Haushaltszwecke, mit einer Heizeinrichtung, mit einer Brühkammer, einem Heißwasserauslauf und mit einem motorisch, insbesondere elektrisch antreibbaren Mehrwegeventil, mit einer Erfassungseinheit von Markierungen an dem Mehrwegeventil und mit einer Steuerungseinrichtung zur Ansteuerung des Mehrwegeventils, also dessen Verstellglieds und/oder dessen Motors. Das Mehrwegeventil kann einen Fluidstrom, insbesondere Heißwasser und/oder Heißdampf, zumindest zwischen der Heizeinrichtung einerseits und der Brühkammer und dem Heißwasserauslauf und ggf. einer Dampfdüse andererseits schalten. Das Mehrwegeventil kann ein angetriebenes, insbesondere rotationssymmetrisches Verstellglied mit einer Mehrzahl umfangseitig verteilter Markierungen an dem Verstellglied umfassen, die regelmäßig oder ungleichmäßig verteilt sein können. An dem Verstellglied ist außerdem eine Initialisierungskennzeichnung angebracht, die einen Startpunkt oder eine separate Kennzeichnungsstelle allein zur Erkennung der Stellung des Verstellglieds darstellt. Die Erfassungseinheit dient dazu, die Markierungen zu erfassen und bei einer Erfassung ein entsprechendes Signal an die Steuerungseinrichtung abzugeben. Weitere Stand der Technik Dokumente sind: FR2844441, DE102006049894, DE60317357, EP2236878. Die EP 1 916 459 B1 und die EP 2 151 613 A1 zeigen die generelle Funktionsweise eines Mehrwegeventils, insbesondere eines solchen mit Keramikscheiben. Es dient dazu, die Verteilung von Heißwasser und/oder Wasserdampf in einem Heißgetränkeautomaten ausgehend von der Heizeinrichtung an unterschiedliche Verbrauchsorte, beispielsweise die Brühkammer, einen Heißwasserauslass, eine Dampfdüse oder einen Überdruckauslass zu verteilen. Das Mehrwegeventil kann motorisch angesteuert sein, wie es beispielsweise der EP 1 656 863 A1 zu entnehmen ist. Um die Mehrzahl an unterschiedlichen Stellungen des Mehrwegeventils zielgenau ansteuern zu können, wird nach Inbetriebnahme des Heißgetränkeautomaten eine sogenannte Initialisierung vorgenommen. Dazu wird das Verstellglied des Mehrwegeventils in einer Leerfahrt betrieben, um die Initialisierungskennzeichnung und damit einen konkreten Ausgangspunkt für den weiteren Betrieb zu erfassen. In der Steuerungseinrichtung ist die Reihenfolge der Stellungen hinterlegt, die beim Betrieb des Verstellglieds in der Betriebsrichtung aufeinander folgen. Damit kann jede gewünschte Stellung des Verstellglieds motorisch angefahren werden.

Aufgabe der Erfindung ist es, den Betrieb des Mehrwegeventils eines Heißgetränkeautomaten zu vereinfachen.

Diese Aufgabe wird bei dem eingangs genannten Heißgetränkeautomaten erfindungsgemäß dadurch gelöst, dass die Erfassungseinheit nicht nur mit den Markierungen, sondern zusätzlich auch mit der Initialisierungskennzeichnung zusammenwirkt und im Betrieb auch für die Erfassung der Initialisierungskennzeichnung ein entsprechendes Signal an die Steuerungseinrichtung abgibt. Die Erfindung wendet sich also davon ab, für die Markierungen einerseits und die Initialisierungskennzeichnung andererseits jeweils separate Erfassungseinrichtungen vorzusehen. Sie verfolgt vielmehr das Prinzip, eine einzige Erfassungseinrichtung sowohl für die Markierungen als auch für die Initialisierungskennzeichnung vorzusehen. Dadurch kann eine Erfassungseinrichtung entfallen, was die Herstellung des Heißgetränkeautomaten verbilligt.

Als Erfassungseinrichtungen, die mit Markierungen bzw. Initialisierungskennzeichnungen zusammenwirken, lassen sich unterschiedliche Systeme und Prinzipien nutzen. Grundsätzlich genügen Erfassungseinrichtungen, die bei der Erfassung einer Markierung oder Kennzeichnung ein erstes Signal abgeben und ohne Erfassung einer Markierung oder Kennzeichnung ein davon zu unterscheidendes anderes Signal oder kein Signal erzeugen. Alternativ dazu kann umgekehrt bei Erfassung einer Markierung bzw. Kennzeichnung eine Signalisierung unterbleiben, Inaktivität der Erfassungseinrichtung dagegen signalisiert werden. Als Erfassungseinrichtungen eignen sich beispielsweise Lichtschranken oder Magnetschalter, die zumindest die Betriebszustände "0" und "1" oder "AUS" und "EIN" kennen und bei Erfassung einer Markierung entsprechende Signale ausgegeben können. Bei der Erfassung einer Kennzeichnung dagegen kann grundsätzlich ein weiteres Signal abgegeben werden, das sich von der Signalisierung einer Markierung unterscheidet. Dafür können aufwändigere Erfassungseinrichtungen erforderlich werden, die einen weiteren Betriebszustand bzw. Schaltzustand kennen. Nach einer vorteilhaften Ausgestaltung der Erfindung dagegen kann die Unterscheidung der Markierungen von der Initialisierungskennzeichnung durch eine Zeitdauer der Erfassung bzw. der Aktivierung oder Deaktivierung der Erfassungseinrichtung erfolgen. Damit lässt sich eine einfache Signalisierung zweier unterschiedlicher Informationen vornehmen, weil die Erfassung einer Zeitdauer für das abgegebene Signal technisch einfach und kostengünstig umsetzbar ist. So kann als Erfassungseinheit weiterhin ein relativ einfacher Schalter dienen, beispielsweise ein Mikroschalter, der lediglich die Schaltpositionen "AUS" und "EIN" kennt und dessen Schaltdauer erfasst wird. Je nach der Dauer des jeweiligen Schaltzustands kann dann die Erfassung einer Markierung von derjenigen einer Initialisierungskennzeichnung unterschieden werden.

Insbesondere ein Schalter als Erfassungseinrichtung kann dreidimensionale Markierungen bzw. Kennzeichnungen zuverlässig erfassen. Die Markierungen bzw. Kennzeichnungen können folglich als Nocken, Stifte, Rillen, Kerben oder dergleichen ausgebildet sein, die die Erfassungseinrichtung mechanisch erfassen können. Dadurch lässt sich eine robuste Ausführung der Erfassungseinrichtung einerseits und der Markierungen und der Initialisierungskennzeichnung andererseits erreichen. Nach einer vorteilhaften Ausgestaltung kann eine Abweichung der Ausbildung der Markierungen gegenüber derjenigen der Initialisierungskennzeichnung jedenfalls in einer der drei Dimensionen liegen, wobei die Abweichung durch die Erfassungseinheit erfassbar ist. Die Markierungen und die Initialisierungskennzeichnung können beispielsweise als Kerben an der Verstelleinrichtung ausgebildet sein, die von der Erfassungseinrichtung abgetastet werden. Die Markierungen können insofern durch ihre Gestaltung von derjenigen der Initialisierungskennzeichnung abweichen, als sie eine kürzere oder längere Betätigungszeit der Erfassungseinrichtung hervorrufen. Beispielsweise können die Markierungen bezüglich des Erfassungswegs der Erfassungseinrichtung am Verstellglied eine größere Breite oder Länge aufweisen, so dass die Erfassungseinrichtung beim Verfahren des Verstellglieds beim Erfassen einer Markierung länger aktiviert wird als beim Erfassen einer Initialisierungskennzeichnung. Alternativ oder zusätzlich kann auch die Tiefe einer Kerbe die Betätigungsdauer einer Erfassungseinrichtung modifizieren, wenn dadurch der Betätigungsweg eines Schalt- bzw. Erfassungselements der Erfassungseinrichtung verlängert wird. Damit bieten sich vielfältige Gestaltungsmöglichkeiten zur Unterscheidung von Markierungen einerseits und der Initialisierungskennzeichnung andererseits, die an den Herstellungsprozess und das Platzangebot des Mehrwegeventils angepasst werden können.

Nach einer vorteilhaften Ausgestaltung der Erfindung kann die Erfassungseinrichtung einen Ein-/Aus-Schalter und das Verstellglied Nocken sowohl als Markierungen als auch als Initialisierungskennzeichnung umfassen. Dabei kann die Initialisierungskennzeichnung eine in Umfangsrichtung des Verstellglieds abweichende Erstreckungslänge gegenüber derjenigen der Markierungen aufweisen. Die Initialisierungskennzeichnung kann also in Umfangsrichtung des Verstellglieds länger oder kürzer ausgebildet sein, so dass es eine gegenüber den Markierungen abweichende Dauer der Aktivität des Schalters hervorruft. Die Betätigungszeit des Schalters kann von der Steuerungseinrichtung erfasst werden, die daraus die Position der Initialisierungskennzeichnung ableitet.

Die Steuerungseinrichtung unterscheidet also zwischen der Dauer der Schalteraktivität der Erfassungseinrichtung bei einer Markierung gegenüber derjenigen Aktivitätsdauer bei der Erfassung einer Initialisierungseinrichtung. Nach einer weiteren vorteilhaften Ausgestaltung der Erfindung umfasst sie darüber hinaus eine Einrichtung zur Registrierung, nämlich zur Erfassung des Zeitpunkts und zur Verarbeitung einer Signalisierungsdauer der Erfassungseinheit, die während der Erfassung jeder Markierung und während der Erfassung der Initialisierungskennzeichnung verstreicht. Ihre Funktion erschöpft sich damit nicht in der Unterscheidung zwischen einer Signalisierung für eine Markierung oder für die Initialisierungskennzeichnung. Sie dient vielmehr dem Zweck, die Position des Verstellglieds genauer zu erfassen. Das Verstellglied verschiebt beispielsweise zwei Keramikscheiben mit Durchbrüchen derart relativ zueinander, dass bei der Erfassung einer Markierung zwei Durchbrüche unterschiedlicher Scheiben zur Deckung kommen und einen Durchfluss ermöglichen. Der Zustand der vollständigen Überdeckung liegt idealerweise genau in der Mitte einer Markierungsnocke vor. Mit der Registrierung der Signalisierungsdauer lässt sich die Markierungsnocke genau in ihrer Mitte anfahren, so dass eine vollständige Überdeckung der Durchbrüche erzielt werden kann. Eine mangelnde Genauigkeit könnte zu einer lediglich teilweisen Überdeckung der Durchbrüche und damit zu einem unerwünscht reduzierten Durchfluss durch das Mehrwegventil führen.

Eine genaue deckungsgleiche Positionierung der Durchbrüche in den Scheiben des Mehrwegventils kann durch Schwergängigkeit der Keramikscheiben gegeneinander, durch Änderungen der Arbeitstemperatur oder durch alterungsbedingten Getriebeverschleiß beeinträchtigt werden. Nach einer weiteren vorteilhaften Ausgestaltung der Erfindung kann der Heißgetränkeautomat daher über eine Erfassungseinrichtung für eine Verstellgeschwindigkeit des Verstellglieds und eine Registrierung der Signalisierungsdauer in Abhängigkeit von der Verstellgeschwindigkeit verfügen. Dadurch wird nicht mehr die absolute Zeitdauer für die Betätigung der Erfassungseinrichtung verwendet, die sich insbesondere bei Alterung des Heißgetränkeautomaten verändern kann. Mit einer Erfassung der Betätigungsdauer in Abhängigkeit bzw. in Relation zur Verstellgeschwindigkeit lässt sich auch bei beispielsweise verschleißbedingten Veränderungen im Betrieb des Mehrwegventils zuverlässig die Mitte einer Markierungsnocke und damit die vollständige Überdeckung von Durchbrüchen in den Keramikscheiben erreichen. Alterungsbedingte oder temperaturbeeinflusste Toleranzen müssen damit nicht zwingend zu einer verschlechterten Funktion des Mehrwegventils führen.

Die Erfassung der Verstellgeschwindigkeit des Verstellglieds bedeutet einen gewissen konstruktiven Aufwand. Nach einer alternativen vorteilhaften Ausgestaltung der Erfindung kann er vermieden werden, indem der Heißgetränkeautomat über eine Aufzeichnungseinrichtung bzw. einen Speicher für Werte der Signalisierungsdauer zumindest der Markierungen des Getränkeautomaten verfügt, dazu über eine Vergleichseinrichtung zum Vergleich mehrerer Werte der Signalisierungsdauer derselben Markierung und schließlich über eine Recheneinheit, die eine angepasste Signalisierungsdauer zur Verstellung des Mehrwegventils an die Steuerungseinheit ausgibt. Die Aufzeichnungseinrichtung, die Vergleichseinrichtung und die Recheneinheit können Bestandteile der Steuerungseinrichtung sein. Im Speicher kann der Wert für die Betätigungsdauer der Erfassungseinrichtung individuell für jede Betätigung durch jede Markierung abgelegt werden. Damit kann ein Datensatz über die Betätigungsdauer für jede Markierung angelegt werden. Bei jeder erneuten Betätigung der Erfassungseinrichtung durch dieselbe Markierung kann die Vergleichseinrichtung den neuen Wert für die Betätigungsdauer mit dem oder den vorherigen Wert(en) vergleichen. Damit kann die Steuerungseinrichtung einen Vergleich zwischen den Werten für eine länger zurückliegende Signalisierungsdauer einer Markierung und einer aktuellen Signalisierungsdauer derselben Markierung anstellen und ggf. Abweichungen daraus ermitteln. Nimmt die Betätigungsdauer zum Beispiel signifikant zu, kann die Steuereinrichtung bei einer erneuten Anfahrt einer Markierung die gewünschte Stellung des Mehrwegventils voraussichtlich nicht bei der werkseitig angenommenen Mitte der Markierung erreichen. Vielmehr kann sie auf dem zuletzt erfassten Wert für die Betätigungsdauer eine "neue Mitte" bestimmen. Damit kann das Mehrwegventil anschließend in Abhängigkeit der festgestellten Abweichungen mit dem neu errechneten Wert angesteuert werden, um unverändert die volle Deckung der Durchbrüche zu erreichen. Die Steuerungseinrichtung stellt damit ein selbst lernendes System dar, das sich den veränderten Verhältnissen anpasst, um die zuverlässige Arbeitsweise des Mehrwegventils auch bei sich insbesondere alterungsbedingt ändernden Verhältnissen aufrecht zu erhalten.

Selbstverständlich kann die oben beispielhaft dargestellte Berechnung hinsichtlich der gespeicherten Wertegrundlage abgewandelt werden, indem etwa nur jeder zweite Wert erfasst wird oder eine Erfassung nur über einen bestimmten Lebensdauerabschnitt oder erst nach Ablauf eines bestimmten Zeitintervalls beginnt o.Ä.

Der Einfachheit halber werden im Stand der Technik bislang motorisch angetriebene Mehrwegventile überwiegend in einer einzigen Betätigungsrichtung angetrieben. Dies vereinfacht die Motorsteuerung und den konstruktiven Aufwand der Mehrwegventile. Nach einer vorteilhaften Ausgestaltung der Erfindung umfasst der Heißgetränkeautomat ein in beide Richtungen antreibbares Verstellglied, eine in beide Betätigungsrichtungen des Verstellglieds symmetrisch ausgebildete Initialisierungskennzeichnung und ebensolche Markierungen und eine in beiden Richtungen ansprechende Erfassungseinheit. Bei einem rotationssymmetrischen Verstellglied können die Initialisierungskennzeichnung und die Markierungen in Umfangsrichtung des Verstellglieds symmetrisch ausgebildet sein. Dazu kann der Heißgetränkeautomat über einen Motor als Antrieb des Mehrwegventils verfügen, der in beide Richtungen ansteuerbar ist. Sofern ein dazwischen geschaltetes Getriebe über eine Schnecke verfügt, ist sie beidseitig axial zu lagern. Um zwischen zwei unterschiedlichen Positionen des Mehrwegventils zu wechseln, braucht das Verstellglied nicht mehr nur in eine Richtung verfahren zu werden und dabei ggf. andere und unter Umständen unerwünschte Zwischenpositionen durchfahren, sondern kann jeweils nach dem kürzesten Weg angesteuert werden. Damit können nicht nur ungewünschte Zwischenpositionen des Ventils vermieden werden, beispielsweise wenn bei einem Milchmischgetränk nach dem Bezug von Heißdampf eine Heißwasserstellung gefahren werden muss und dadurch Wasser aus dem Milchschäumer bzw. Heißwasserauslauf austritt. Dadurch kann nicht nur eine Verunsicherung des Kunden vermieden werden, sondern auch die Betätigungsdauer des Mehrwegventils verkürzt werden, so dass sich Arbeitsabläufe der Getränkezubereitung zeitlich optimieren, nämlich verkürzen lassen. Neben einer Verkürzung der Zubereitungszeiten von Heißgetränken, die sich als Bedienungsvorteil für den Kunden zeigt, lässt sich dadurch auch eine Energieeinsparung beim Betrieb des Heißgetränkeautomaten erzielen.

Nach einer vorteilhaften Ausgestaltung der Erfindung verfügt der Heißgetränkeautomat über radial vorspringende Nocken als Initialisierungskennzeichnung und als Markierungen sowie über einen Mikroschalter mit einem translatorisch verschiebbaren Schaltstift als Betätigungselement. Jede Nocke verfügt über eine steigende und eine fallende Flanke, so dass sich umfangsseitig an dem Verstellglied des Mehrwegeventils ein Wechsel aus Nocken und dazwischen liegenden längeren oder kürzeren Lücken ergibt. Eine steigende und eine fallende Flanke zweier benachbarter Nocken können auch lückenlos aneinander anschließen. Die Flanken sorgen für eine Betätigung des Schalters bzw. der Erfassungseinheit, ohne dass er bzw. sie sich verhakt oder anderweitig blockiert. Sie lassen sich kostengünstig beispielsweise als Kunststoff-Spritzgussteil herstellen und definieren eindeutig eine Betätigungsdauer der Erfassungseinheit durch die Verschiebung des Schaltstifts der Erfassungseinheit. Alternativ dazu kann auch die Erfassungseinheit bzw. das Schaltelement mit einer steigenden und einer fallenden Flanke ausgebildet sein und den Nocken eine Rippen- oder Stiftform gegeben werden.

Die oben genannte Aufgabe wird außerdem durch ein motorisch antreibbares Mehrwegeventil für einen Heißgetränkeautomaten gelöst, das eine Erfassungseinheit zur Erfassung von Markierungen an einem Verstellglied und deren Signalisierung umfasst, wobei die Erfassungseinheit nicht nur mit den Markierungen, sondern zusätzlich auch mit einer Initialisierungskennzeichnung am Verstellglied zusammenwirkt und im Betrieb auch für die Erfassung der Initialisierungskennzeichnung ein entsprechendes Signal an eine Steuerungseinrichtung abgibt. Das Mehrwegeventil kann vorteilhaft für einen Betrieb des Verstellglieds in zwei Betätigungsrichtungen ausgebildet sein, wobei es seine Stärken eines zeiteffizienteren Betriebs ausspielen kann. Es kann in der oben beschriebenen Weise weitergebildet werden, um auch unter sich verändernden Bedingungen exakt betrieben werden zu können.

Die oben genannte Aufgabe wird schließlich durch ein Verfahren zum Betreiben eines Heißgetränkeautomaten für Haushaltszwecke umfassend eine Heizeinrichtung, eine Brühkammer, einen Heißwasserauslauf, eine Steuerungseinrichtung und ein motorisch antreibbares Mehrwegeventil, das ein Verstellglied mit mehreren Markierungen und eine mit den Markierungen zusammenwirkende Erfassungseinheit aufweist, gelöst, das die folgenden Verfahrensschritte umfasst:
- Erfassen der Dauer einer ersten Betätigung der Erfassungseinrichtung durch eine Markierung und Speichern eines ersten Werts dafür,
- Erfassen der Dauer einer zweiten Betätigung der Erfassungseinrichtung durch dieselbe Markierung und Speichern eines zweiten Werts dafür,
- Ermitteln einer Differenz des ersten und des zweiten Werts,
- Errechnen eines Korrekturfaktors aus der Differenz zur Ansteuerung des Mehrwegeventils bei einer dritten Betätigung derselben Markierung.

Die Ansteuerung des Mehrwegeventils erfolgt in aller Regel derart, dass eine gewünschte Funktion durch Anfahren der Mitte einer Markierung eingestellt wird. Werkseitig sind den einzelnen Funktionen des Mehrwegeventils Positionen am Verstellglied zugeordnet, die die Markierungen definieren. Ihr Abstand wird von der Initialisierungskennzeichnung ausgehend beispielsweise durch die Anzahl der Umdrehungen bestimmt. Durch Schwergängigkeit der Keramikscheiben gegeneinander, durch Änderungen der Arbeitstemperatur, durch alterungsbedingten Getriebeverschleiß oder beispielsweise alterungsbedingt zunehmende Hystereseeffekte bei der Richtungsumkehr des Motorbetriebs kann sich die Anzahl verändern. Der errechnete Korrekturfaktor ermöglicht eine Anpassung an diese Veränderungen, so dass die den Funktionen zugeordneten Markierungen dauerhaft mittig angefahren werden können.

Das Prinzip der Erfindung wird im Folgenden anhand einer Zeichnung beispielshalber noch näher erläutert. In der Zeichnung zeigen:
- Figur 1:: ein erfindungsgemäßes Verstellelement,
- Figur 2:: ein motorisch angetriebenes Mehrwegventil.

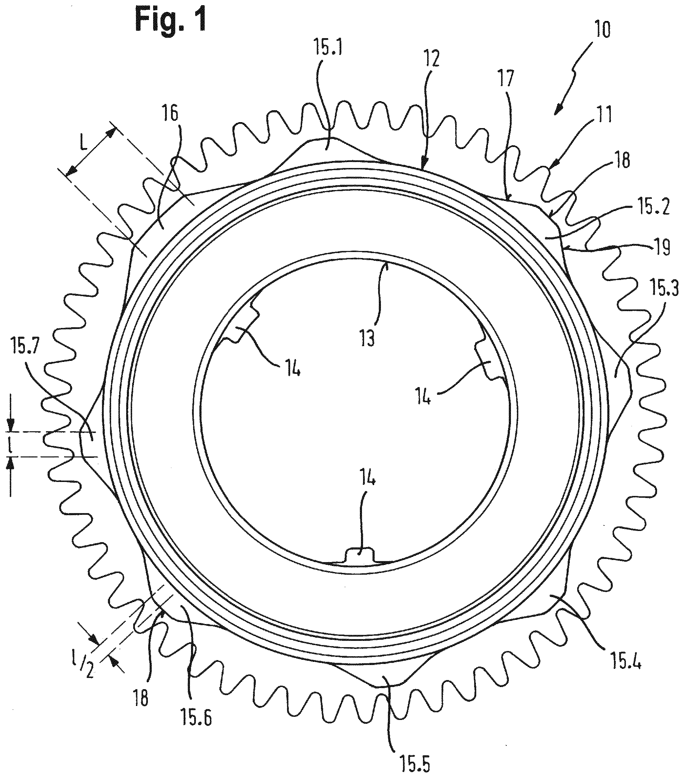

Figur 1 zeigt ein rotationssymmetrisches Verstellelement 10 eines motorisch angetriebenen Mehrwegventils, das sich aus einem Zahnrad 11 mit einer Stirnverzahnung zum Antreiben des Verstellelements 10 und aus einem Nockenrad 12 zusammensetzt, das koaxial an dem Zahnrad 11 befestigt ist. Das Zahnrad 11 und das Nockenrad 12 sind ringförmig ausgebildet. Das Nockenrad 12 trägt an seiner Innenseite 13 drei radial nach innen einspringende Nasen 14 als Mitnehmer für eine nicht dargestellte Keramikscheibe des Mehrwegventils. Außenseitig trägt es sieben Markierungsnocken 15.1, 15.2, ... 15.7 und eine Initialisierungsnocke 16. Sie sind paarweise gruppiert, so dass jeweils zwei Nocken 15, 16 einen geringeren Abstand zueinander aufweisen und zur jeweils rechts und links benachbarten nächsten Nocke einen größeren Abstand einhalten. Jede Nocke 15, 16 weist eine steigende Flanke 17, ein Plateau 18 und eine fallende Flanke 19 auf. Das Plateau 18, das sich weitgehend parallel zum übrigen Umfang des Nockenrads 12 erstreckt, hat bei den Markierungsnocken 15 in Umfangsrichtung des Verstellelements 10 eine kürzere Länge I, bei der Initialisierungsnocke 16 dagegen eine größere Länge L. Die steigenden Flanken 17 und die fallenden Flanken 19 haben bei jeder der Nocken 15, 16 jeweils die gleichen Längen und die gleiche Neigung, so dass alle Nocken 15, 16 radial gleich weit vom Nockenrad 12 abstehen.

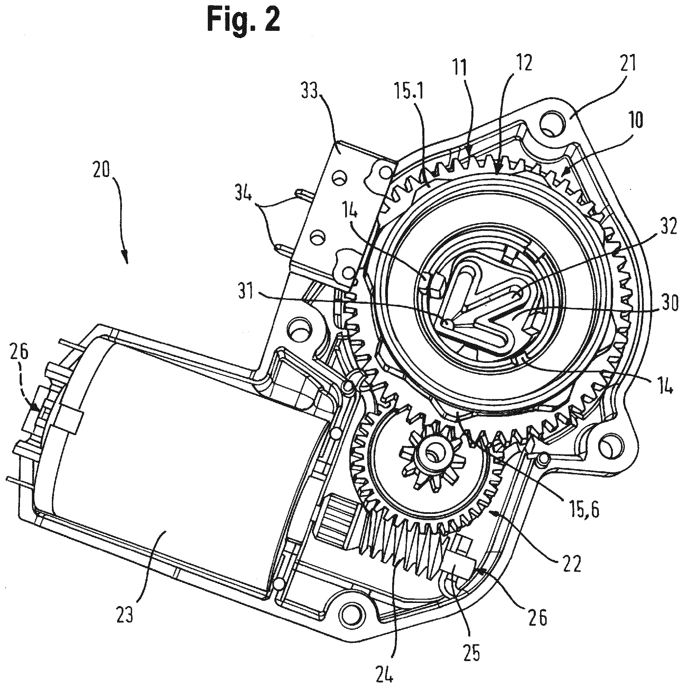

Figur 2 bietet einen Blick auf das geöffnete Gehäuse 21 eines motorisch angetriebenen Mehrwegventils 20. Darin ist das Verstellelement 10 über ein Getriebe 22 kinematisch mit einem elektrisch betreibbaren Motor 23 gekoppelt. Auf der Abtriebseite des Motors 23 ist eine Schnecke 24 angeordnet, deren Achse 25 in einer axialen Lagerung 26 beidseits axial aufgenommen ist.

Unterhalb des Verstellelements 10 und damit in einer zu seiner Erstreckungsebene parallelen Ebene ist eine ortsfester Gehäuseabschnitt 30 mit einem Durchbruch 31 und einer pfeilförmigen Aussparung 32 ortsfest angeordnet. Der Durchbruch 31 steht in einer fluidischen Verbindung mit einem Fluidsystem eines Heißgetränkeautomaten und liegt dort insbesondere stromab einer Heizeinrichtung. Von dort erhält das Mehrwegeventil 20 einen Heißwasser- oder Heißdampfzustrom, der über den Durchbruch 31 und die pfeilförmige Aussparung 32 auf weitere, nicht dargestellte Durchbrüche in ebenso wenig dargestellten, verstellbaren Dicht- und Keramikscheiben verteilt werden kann. Eine nicht dargestellte Keramikscheibe liegt in der Erstreckungsebene des Nockenrads 12 und lässt sich bei Verdrehung des Verstellelements 10 über die Nasen 14 gegenüber dem Gehäuseabschnitt 30 verdrehen.

In der Figur 2 links neben dem Verstellelement 10 und in der Erstreckungsebene des Nockenrads 12 liegt ein Schalter 33 als Erfassungseinheit der Nocken 15, 16. Sein nicht erkennbares Schaltelement ist dem Nockenrad 12 zugewandt, durch die Initialisierungsnocke 16 in den Schalter 33 eingefahren und daher nicht sichtbar. In dessen eingefahrenem Zustand stellt der Schalter 33 einen Kontakt zwischen seinen beiden Polen 34 her, wodurch ein Signal an eine ebenfalls nicht dargestellte Steuerungseinrichtung generiert wird.

Der Motor 23 treibt über das Getriebe 22 das Verstellelement 10 an. Abweichend vom Stand der Technik erfolgt dies in beide Drehrichtungen des Verstellelements 10 bzw. des Motors 23. Die abtriebseitig angeordnete Schnecke 24 erfordert daher die beidseitige axiale Lagerung 26. Bei Inbetriebnahme des Mehrwegventils 20 wird zunächst eine Initialisierungsfahrt vorgenommen, bei der die Stellung des Verstellelements 10 festgestellt wird. Dazu wird das Verstellelement 10 in eine beliebige Drehrichtung verdreht, ohne dass das Mehrwegventil 20 mit Heißdampf oder Heißwasser beaufschlagt wird. Dabei detektiert der Schalter 33 die Nocken 15, 16. Bei jeder Aktivierung des Schalters 33 durch eine der Nocken 15, 16 gibt der Schalter 33 ein Schaltsignal an die Steuerungseinrichtung ab. Die Dauer des Schaltsignals entspricht der Dauer der Betätigung 33 durch eine der Nocken 15, 16. Aufgrund der unterschiedlichen Längen I, L der Plateaus 18 wird der Schalter 33 beim Vorbeifahren einer Markierungsnocke 15 kürzer aktiviert als bei der Erfassung der Initialisierungsnocke 16. Sobald also der Schalter 33 ein langes Signal abgibt, kann die Steuerungseinrichtung von einer definierten Stellung des Verstellelements 10 ausgehen, wie es die Figur 2 zeigt.

Jeder Stellung des Verstellelements 10 entspricht eine konkrete Stellung des Mehrwegventils 20. So ist jeder Markierungsnocke 15 eine bestimmte Funktion bzw. Leitungspassage des Mehrwegventils 20 zugeordnet, beispielsweise die Einleitung von Heißwasser in die Brühkammer oder die Versorgung einer Dampfdüse mit Heißdampf. Die Anordnung, nämlich die Reihenfolge dieser Funktionen ist in der Steuerungseinrichtung hinterlegt. Ausgehend von der Stellung des Verstellelements 10 bei einer Aktivierung des Schalters 33 durch die Initialisierungsnocke 16 ist jeder weiteren Aktivierung des Schalters 33 durch eine Markierungsnocke 15 eine konkrete Funktion zugeordnet. Sie kann nun durch Aktivierung des Motors 23 in einer seiner beiden Drehrichtungen und damit durch Verdrehung des Verstellelements 10 auf dem kürzeren der beiden möglichen Wege angefahren werden. Ist z. B. die Funktion der Heißdampfausgabe durch die Dampfdüse der Markierungsnocke 15.6 zugeordnet, die gegen den Uhrzeigersinn betrachtet nur eine Vierteldrehung von der Initialisierungsnocke 16 entfernt liegt, so muss das Verstellelement 10 nicht erst um eine Dreivierteldrehung im Uhrzeigersinn verdreht werden - wie im Stand der Technik, der nur eine Drehrichtung beispielsweise im Uhrzeigersinn kennt - , sondern kann gegen den Uhrzeigersinn und damit in der Gegenrichtung lediglich um eine Vierteldrehung verstellt werden. Damit ergibt sich nicht nur eine schnellere Betätigung des Mehrwegeventils 20 und eine schnellere Aktivierung der Heißdampf-Funktion, sondern aufgrund des kürzeren Weges müssen auch keine momentan unerwünschten Funktionen überfahren werden, die den Nocken 15.1, 15.2, ... 15.5 zugeordnet sind und die den Benutzer des Heißgetränkeautomaten, der die technischen Abläufe im Mehrwegeventil 20 nicht nachvollziehen kann, aufgrund von unerklärlichen oder unerwünschten Reaktionen des Heißgetränkeautomaten verwirren könnten. Schließlich bedeutet der kürzere Betätigungsweg auch einen geringeren Energieaufwand beim Betrieb des Heißgetränkeautomaten.

Die Heißdampffunktion ist der Nocke 15.6 zugeordnet. Eine entsprechende Stellung der Keramikscheibe 30 gegenüber der nicht dargestellten weiteren Keramikscheibe in der gewünschten vollständigen Überdeckung, die einen vollständigen Durchfluss ermöglicht, entspricht einer Stellung der Markierungsnocke 15.6 am Schalter 33, und zwar genau auf der Mitte ihres Plateaus 18, also auf der Hälfte seiner Länge I. Dieser Punkt ist für den Neuzustand des Mehrwegeventils 20 in der nicht dargestellten Steuerungseinrichtung hinterlegt, und zwar in Bezug auf die Initialisierungsnocke 16 durch eine bestimmte Anzahl von Umdrehungen des Motors 23. Durch alterungsbedingte Hystereseeffekte bei der Richtungsumkehr des Motors 23 und durch Getriebeabnutzung kann sich die erforderliche Anzahl der Umdrehungen des Motors 23 zum Erreichen der Mitte des Plateaus 18 der Markierungsnocke 15.6 verändern. Daher werden in der Steuerungseinrichtung Werte für die Betätigungsdauer des Schalters 33 jeweils für jede Markierungsnocke 15.1., 15,2, ... 15.7 individuell hinterlegt. Anhand der daraus entstehenden Datensätze kann die Steuerungseinrichtung ermitteln, in welcher Weise sich die Werte für die Betätigungsdauer des Schalters 33 jeder einzelnen Markierungsnocke 15 verändern. Daraus lässt sich ein Korrekturfaktor errechnen, der bei jeder weiteren Anfahrt z.B. der Markierungsnocke 15.6 berücksichtigt wird, um genau die Mitte ihres Plateaus 18 und damit die erforderliche Überdeckung bzw. Stellung der Keramikscheiben zueinander zu erreichen. Damit lassen sich auf einfache Weise insbesondere alterungsbedingte Veränderungen, aber auch solche, die beispielsweise durch Änderungen der Arbeitstemperatur oder durch Getriebeschlupf hervorgerufen werden, ausgleichen und dadurch eine dauerhafte hohe Qualität des Heißgetränks sicherstellen.

Da es sich bei dem vorhergehenden, detailliert beschriebenen Mehrfachventil um ein Ausführungsbeispiel handelt, kann es in üblicher Weise vom Fachmann in einem weiten Umfang modifiziert werden, ohne den Bereich der Erfindung zu verlassen. Insbesondere können auch die konkreten Ausgestaltungen der Markierungs- und Initialisierungsnocken in anderer Form als in der hier Beschriebenen folgen. Ebenso können die Initialisierungsnocke und die Markierungsnocken in einer anderen Form ausgestaltet werden, wenn dies aus Platzgründen bzw. funktionalen Gründen notwendig ist. Weiterhin schließt die Verwendung der unbestimmten Artikel "ein" bzw. "eine" nicht aus, dass die betreffenden Merkmale auch mehrmals vorhanden sein können.

### Bezugszeichenliste

- 10: Verstellelement
- 11: Zahnrad
- 12: Nockenrad
- 13: Innenseite
- 14: Nase
- 15.1, 15.2, ... 15.7: Markierungsnocke
- 16: Initialisierungsnocke
- 17: steigende Flanke
- 18: Plateau
- 19: fallende Flanke
- 20: Mehrwegeventil
- 21: Gehäuse
- 22: Getriebe
- 23: Motor
- 24: Schnecke
- 25: Achse
- 26: axiale Lagerung
- 30: Keramikscheibe
- 31: Durchbruch
- 32: pfeilförmige Aussparung
- 33: Schalter
- 34: Kontakt
- I, L: Länge der Plateaus 18

## Patentansprüche

1. Heißgetränkeautomat, insbesondere Kaffeevollautomat für Haushaltszwecke,
- mit einer Heizeinrichtung,
- mit einer Brühkammer,
- mit einem Heißwasserauslauf und
- mit einem motorisch antreibbaren Mehrwegeventil, das einen Fluidstrom zumindest zwischen der Heizeinrichtung einerseits und der Brühkammer und dem Heißwasserauslass andererseits schaltet, mit einem angetriebenen Verstellglied, mit einer Mehrzahl umfangsseitig verteilter Markierungen an dem Verstellglied,
- mit einer davon unterschiedlichen Initialisierungskennzeichnung am Verstellglied,
- mit einer mit den Markierungen zusammenwirkenden Erfassungseinheit, die erfasste Markierungen signalisiert, und
- mit einer Steuerungseinrichtung zur Ansteuerung des Mehrwegventils,
**dadurch gekennzeichnet, dass** die Erfassungseinheit (33) mit der Initialisierungskennzeichnung (16) zusammenwirkt und sie ein in der Steuerungseinrichtung auswertbares Signal abgibt.

2. Heißgetränkeautomat nach Anspruch 1, **gekennzeichnet durch** eine Unterscheidung der Markierungen (15) von der Initialisierungskennzeichnung (16) durch eine Zeitdauer der Erfassung.

3. Heißgetränkeautomat nach Anspruch 2 mit dreidimensional ausgebildeten Markierungen und einem Schalter (33) als Erfassungseinrichtung, **gekennzeichnet durch** eine Abweichung der Ausbildung der Markierungen (15) in einer Dimension gegenüber der Ausbildung der Initialisierungskennzeichnung (16), wobei die Abweichung durch die Erfassungseinheit (33) erfassbar ist.

4. Heißgetränkeautomat nach Anspruch 2 oder 3, **gekennzeichnet durch** einen Ein-AusSchalter (33) als Erfassungseinrichtung und Nocken sowohl als Markierungen (15) als auch als Initialisierungskennzeichnung (16) und mit einer in Umfangsrichtung des Verstellglieds (10) längeren Erstreckung (L) der Initialisierungskennzeichnung (16) gegenüber den Markierungen (15).

5. Heißgetränkeautomat nach einem der obigen Ansprüche, **gekennzeichnet durch** eine Einrichtung zur Registrierung einer Signalisierungsdauer der Erfassungseinheit (33) während der Erfassung einer Markierung (15) oder der Initialisierungskennzeichnung (16).

6. Heißgetränkeautomat nach dem Anspruch 5, **gekennzeichnet durch** eine Aufzeichnungseinrichtung für die Signalisierungsdauer zumindest der Markierungen (15) über einen Lebensdauerabschnitt des Getränkeautomaten, durch eine Vergleichseinrichtung zum Vergleich mehrerer Werte der Signalisierungsdauer derselben Markierung (15.6) und durch eine Recheneinheit, die eine angepasste Signaldauer zur Verstellung des Mehrwegventils (10) an die Steuerungseinheit ausgibt.

7. Heißgetränkeautomat nach einem der obigen Ansprüche, **gekennzeichnet durch** ein in beide Richtungen antreibbares Verstellglied (10), durch eine in Umfangsrichtung des Verstellglieds (10) symmetrisch ausgebildete Initialisierungskennzeichnung (16) und ebensolche Markierungen (15) und eine in beiden Richtungen ansprechende Erfassungseinheit (33).

8. Heißgetränkeautomat nach dem obigen Anspruch, **gekennzeichnet durch** Nocken mit steigenden Flanken (17) und fallenden Flanken (19) als Initialisierungskennzeichnung (16) und als Markierungen (15).

9. Verfahren zum Betreiben eines Heißgetränkeautomaten für Haushaltszwecke mit einer Heizeinrichtung, mit einer Brühkammer, mit einem Heißwasserauslauf, mit einer Steuerungseinrichtung und mit einem motorisch antreibbaren Mehrwegeventil umfassend ein Verstellglied mit mehreren Markierungen und eine mit den Markierungen zusammenwirkende Erfassungseinheit, mit den folgenden Verfahrensschritten:
- Erfassen der Dauer einer ersten Betätigung der Erfassungseinrichtung durch eine Markierung und Speichern eines ersten Werts dafür,
- Erfassen der Dauer einer zweiten Betätigung der Erfassungseinrichtung durch dieselbe Markierung und Speichern eines zweiten Werts dafür,
- Ermitteln einer Differenz des ersten und des zweiten Werts,
- Errechnen eines Korrekturfaktors aus der Differenz zur Ansteuerung des Mehrwegeventils bei einer dritten Betätigung derselben Markierung.

## Claims

1. Hot beverage machine, in particular fully automatic coffee machine for domestic purposes,
- with a heating device,
- with a brewing chamber,
- with a hot water discharge and
- with a motor-driveable multi-port valve, which connects a fluid flow at least between the heating device on the one hand and the brewing chamber and the hot water discharge on the other hand, with a driven adjustment element, with a plurality of markers which are distributed around the periphery of the adjustment element,
- with an initialisation identifier on the adjustment element which differs therefrom,
- with a detection unit which interacts with the markers and which signals detected markers, and
- with a control device for actuating the multi-port valve,
**characterised in that** the detection unit (33) interacts with the initialisation identifier (16) and it outputs a signal which can be evaluated in the control device.

2. Hot beverage machine according to claim 1, **characterised by** a difference in the markers (15) from the initialisation identifier (16) formed by a duration of the detection.

3. Hot beverage machine according to claim 2 with three-dimensional markers and a switch (33) as a detection device, **characterised by** a variation in the design of the markers (15) in a dimension compared with the design of the initialisation identifier (16), wherein the variation can be detected by the detection unit (33).

4. Hot beverage machine according to claim 2 or 3, **characterised by** an on-off switch (33) as a detection device and cams both as markers (15) and also as an initialisation identifier (16) and with a longer extension (L) of the initialisation identifier (16) in the peripheral direction of the adjustment element (10) compared with the markers (15).

5. Hot beverage machine according to one of the above claims, **characterised by** a device for registering a signalling duration of the detection unit (33) during the detection of a marker (15) or the initialisation identifier (16).

6. Hot beverage machine according to claim 5, **characterised by** a recording device for the signalling duration at least of the markers (15) during a period of the service life of the beverage machine, by a comparison device for comparing a number of values of the signalling duration of the same maker (15.6) and by a computing unit, which outputs an adjusted signal duration in order to adjust the multi-port valve (10) to the control unit.

7. Hot beverage machine according to one of the above claims, **characterised by** an adjustment element (10) which can be driven in both directions, by an initialisation identifier (16) designed to be symmetrical in the peripheral direction of the adjustment element (10) and the same markers (15) and a detection unit (33) which operates in both directions.

8. Hot beverage machine according to the above claim, **characterised by** cams with rising edges (17) and falling edges (19) as an initialisation identifier (16) and as markers (15).

9. Method for operating a hot beverage machine for domestic purposes with a heating device, with a brewing chamber, with a hot water discharge, with a control device and with a motor-driveable multi-port valve comprising an adjustment element with a number of markers and a detection unit which interacts with the markers, having the following method steps:
- detecting the duration of a first actuation of the detection device by means of a marker and storing a first value therefor,
- detecting the duration of a second actuation of the detection device by means of the same marker and storing a second value therefor,
- determining a difference between the first and the second value,
- calculating a correction factor from the difference in order to actuate the multi-port valve upon a third actuation of the same marker.

## Revendications

1. Distributeur automatique de boisson chaude, en particulier distributeur de café entièrement automatique à usage domestique,
- avec un dispositif chauffant,
- avec une chambre de préparation,
- avec une sortie d'eau chaude et
- avec une soupape à voies multiples pouvant être entraînée par un moteur, qui raccorde un flux de fluide au moins entre le dispositif chauffant d'une part, et la chambre de préparation et la sortie d'eau chaude d'autre part, avec un organe de réglage entraîné, avec une pluralité de marquages répartis sur la périphérie de l'organe de réglage,
- avec une identification d'initialisation différente de celui-ci sur l'organe de réglage,
- avec une unité de détection coopérant avec les marquages qui signale les marquages détectés, et
- avec un dispositif de commande pour la commande de la soupape à voies multiples,
**caractérisé en ce que** l'unité de détection (33) coopère avec l'identification d'initialisation (16) et **en ce qu'**elle émet un signal pouvant être évalué dans le dispositif de commande.

2. Distributeur automatique de boisson chaude selon la revendication 1, **caractérisé par** une différenciation des marquages (15) de l'identification d'initialisation (16) au cours d'une période de la détection.

3. Distributeur automatique de boisson chaude selon la revendication 2 avec des marquages constitués en trois dimensions et un commutateur (33) en tant que dispositif de détection, **caractérisé par** une variation de la constitution des marquages (15) dans une dimension par rapport à la constitution de l'identification d'initialisation (16), dans lequel la variation est détectable par l'unité de détection (33).

4. Distributeur automatique de boisson chaude selon la revendication 2 ou la revendication 3, **caractérisé par** un commutateur marche/arrêt (33) en tant que dispositif de détection et des cames tant comme marquages (15) que comme identification d'initialisation (16) et avec une étendue (L) de l'identification d'initialisation (16) plus longue dans la direction périphérique de l'organe de réglage (10) par rapport aux marquages (15).

5. Distributeur automatique de boisson chaude selon l'une des revendications précédentes, **caractérisé par** un dispositif pour l'enregistrement d'une durée de signalisation de l'unité de détection (33) pendant la détection d'un marquage (15) ou de l'identification d'initialisation (16).

6. Distributeur automatique de boisson chaude selon la revendication 5, **caractérisé par** un dispositif d'enregistrement pour la durée de signalisation d'au moins les marquages (15) sur une portion de durée de vie du distributeur automatique de boisson, par un dispositif de comparaison pour la comparaison de plusieurs valeurs de la durée de signalisation du même marquage (15.6) et par une unité de calcul qui émet une durée de signal adaptée pour le réglage de la soupape à voies multiples (10) sur l'unité de commande.

7. Distributeur automatique de boisson chaude selon l'une des revendications précédentes, **caractérisé par** un organe de réglage (10) pouvant être entraîné dans les deux directions, par une identification d'initialisation (16) constituée symétriquement dans la direction périphérique de l'organe de réglage (10) et des marquages (15) identiques et une unité de détection (33) sensible dans les deux directions.

8. Distributeur automatique de boisson chaude selon la revendication précédente, **caractérisé par** des cames avec des bords montants (17) et des bords descendants (19) en tant qu'identification d'initialisation (16) et en tant que marquages (15).

9. Procédé de fonctionnement d'un distributeur automatique de boisson chaude à usage domestique avec un dispositif chauffant, avec une chambre de préparation, avec une sortie d'eau chaude, avec un dispositif de commande et avec une soupape à voies multiples pouvant être entraînée par un moteur, comportant un organe de réglage avec plusieurs marquages et une unité de détection coopérant avec les marquages, comportant les étapes de procédé suivantes :
- détection de la durée d'un premier actionnement du dispositif de détection par un marquage et mise en mémoire d'une première valeur pour celle-ci,
- détection de la durée d'un deuxième actionnement du dispositif de détection par le même marquage et mise en mémoire d'une deuxième valeur pour celle-ci,
- détermination d'une différence entre la première et la deuxième valeur,
- calcul d'un facteur de correction à partir de la différence pour la commande de la soupape à voies multiples lors d'un troisième actionnement du même marquage.
